# EUROPÄISCHE PATENTANMELDUNG

(11) **EP 1 016 561 A1**
(43) Veröffentlichungstag der Anmeldung: **05.07.2000**
(21) Anmeldenummer: 99124520.0
(22) Anmeldetag: 09.12.1999
(51) Int. Cl.: B60K 31/02, F02D 11/10

(54) **Kraftfahrzeug mit einem Getriebe**

(30) Priorität: 28.12.1998 DE 29823085 U
(71) Anmelder: Yamaha Motor Deutschland GmbH, 41460 Neuss (DE)
(72) Erfinder: Schütte, Rolf, 31749 Auetal (DE)
(74) Vertreter: Paul, Dieter-Alfred, Dipl.-Ing.

(57) **Zusammenfassung**

Die Erfindung betrifft ein Kraftfahrzeug mit einem Motor (31), einem Getriebe (1) und einer Gasbetätigung für den Motor (31), welche einen Drahtzug (29) aufweist, der ein Betätigungsorgan, zum Beispiel ein Gaspedal oder einen Handdrehgriff (28), mit dem Motor (31) verbindet, sowie mit einer Geschwindigkeitsbegrenzungseinrichtung, welches dadurch gekennzeichnet ist, daß die Geschwindigkeitsbegrenzungseinrichtung eine Speichereinrichtung (36) aufweist, durch die ein Drahtzugabschnitt (37) des Drahtzuges (29) verläuft, wobei die Speichereinrichtung (36) mit einer Verstelleinrichtung (39, 40, 41, 42; 39, 45, 46, 47) zur Veränderung der Länge des in der Speichereinrichtung (36) verlaufenden Drahtzugabschnitts (37) versehen ist und wobei Verstelleinrichtung (39, 40, 41, 42; 39, 45, 46, 47) und Abtaster (43, 49, 50, 51) derart gekoppelt sind, daß die Länge des eingespeicherten Drahtzugabschnittes (37) spätestens bei Erreichen einer bestimmten Grenzgeschwindigkeit verringert wird.

## Beschreibung

Die Erfindung betrifft ein Kraftfahrzeug, insbesondere einen Motorroller, mit einem Motor, einem Getriebe und einer Gasbetätigung für den Motor, welche einen Drahtzug aufweist, der ein Betätigungsorgan, z. B. ein Gaspedal oder einen Handgasdrehgriff, mit dem Motor verbindet, sowie mit einer Geschwindigkeitsbegrenzungseinrichtung, die einen Abtaster für die Geschwindigkeit des Fahrzeuges oder einer damit korrelierenden Größe aufweist.

Bestimmte Kraftfahrzeuge, insbesondere Motorroller oder kleinere Personenkraftwagen, dürfen aufgrund gesetzlicher Regelung eine bestimmte Höchstgeschwindigkeit nicht überschreiten. Damit dies gesichert ist, weisen solche Kraftfahrzeuge eine Geschwindigkeitsbegrenzungseinrichtung auf. Im Stand der Technik geschieht dies durch Beeinflussung der Zündung des Motors, wenn die zulässige Höchstgeschwindigkeit erreicht wird, beispielsweise durch Unterbrechung der Zündung. Hierzu weist die Geschwindigkeitsbegrenzungseinrichtung einen Abtaster für die Geschwindigkeit des Fahrzeuges oder einer damit korrelierenden Größe, beispielsweise der Drehzahl des Antriebes zwischen Getriebeausgang und angetriebenem Rad.

Die bekannten Geschwindigkeitsbegrenzungseinrichtungen haben erhebliche Nachteile. Bei Unterbrechung der Zündung werden in erheblichem Umfang unverbrannte Gase ausgestoßen, was im ungünstigsten Fall zu Explosionen im Auspuff führen kann. Außerdem führt die Zündunterbrechung zu stoßweisen Verzögerungen mit erheblichen mechanischen Beanspruchungen.

Der Erfindung liegt somit die Aufgabe zugrunde, eine Geschwindigkeitsbegrenzungseinrichtung bei Kraftfahrzeugen der eingangs genannten so auszubilden, daß der Ausstoß unverbrannter Gase vermieden und das Erreichen der zulässigen Höchstgeschwindigkeit nicht mit plötzlichen Antriebsunterbrechungen verbunden ist.

Diese Aufgabe wird erfindungsgemäß dadurch gelöst, daß die Geschwindigkeitsbegrenzungseinrichtung eine Speichereinrichtung aufweist, durch die ein Drahtzugabschnitt des Drahtzuges verläuft, wobei die Speichereinrichtung mit einer Verstelleinrichtung zur Veränderung der Länge des in der Speichereinrichtung verlaufenden Drahtzugabschnittes versehen ist und wobei Verstelleinrichtung und Abtaster derart gekoppelt sind, daß die Länge des eingespeicherten Drahtzugabschnittes spätestens bei Erreichen einer bestimmten Grenzgeschwindigkeit verringert wird.

Grundgedanke der Erfindung ist es also, die Leistung des Motors durch Eingriff in dessen Gassteuerung zu verringern, und zwar spätestens, wenn die Grenzgeschwindigkeit erreicht wird. Dies geschieht durch Verringerung des Querschnittes an der Drosseleinrichtung des Vergasers. Hierdurch wird vermieden, daß unverbrannte Gase ausgestoßen werden. Außerdem setzt die Geschwindigkeitsbegrenzung sehr weich ein und erlaubt deshalb ein risikoloses und stoßfreies Fahren bis an die Grenzgeschwindigkeit.

Die Speichereinrichtung ermöglicht es, die wirksame Länge des Drahtzuges im Bereich der Grenzgeschwindigkeit so zu vergrößern, daß in Vollgasstellung des Betätigungsorganes, beispielsweise des Gaspedals oder eines Handgasdrehgriffs, nicht mehr die volle Öffnung an der Drosseleinrichtung des Vergasers erreicht wird. Auf diese Weise wird die Leistung so herabgesetzt, daß ein Überschreiten der Grenzgeschwindigkeit nicht möglich ist.

In Ausbildung der Erfindung ist vorgesehen, daß die Speichereinrichtung als Schlaufenspeicher ausgebildet ist, in der der Drahtzug in Form einer Schlaufe durch die Speichereinrichtung geführt wird, wobei die Länge der Schlaufe durch die Verstelleinrichtung in Abhängigkeit von der Geschwindigkeit des Kraftfahrzeuges verändert wird. Hierzu kann der Schlaufenspeicher wenigstens eine von dem Drahtzugabschnitt umschlungene Schlaufenrolle aufweisen, deren Stellung über die Verstelleinrichtung veränderbar ist.

In weiterer Ausgestaltung der Erfindung ist vorgesehen, daß die Verstelleinrichtung einen elektrischen Stellantrieb aufweist und der Abtaster als ein elektrisches Siqnal erzeugender Sensor ausgebildet ist. Dabei kann der Sensor beispielsweise als Drehzahlsensor ausgebildet sein, der getriebeausgangsseitig angeordnet ist, also in einem Bereich, wo die Drehzahl proportional zur Fahrgeschwindigkeit des Kraftfahrzeuges ist.

Bei Kraftfahrzeugen der hier beschriebenen Art ist das Getriebe häufig als stufenloses Getriebe ausgebildet, das einen Antriebsriemen oder ein Schubgliederband sowie ein antriebsseitiges und ein abtriebsseitiges Scheibenpaar mit jeweils zwei abstandsveränderlichen Kegelscheiben aufweist, wobei die Scheibenpaare von dem Antriebsriemen bzw. dem Schubgliederband umschlungen sind, Solche Getriebe werden auch Variomatic-Getriebe genannt und sind bei Motorrollern und auch Klein-PKWs verbreitet. Bei Getrieben solcher Art kann der Abtaster auch als Fühler zur Erfassung des Radius' der Umschlingung an einer der Scheibenpaare oder des Abstandes der Kegelscheiben eines Scheibenpaares ausgebildet sein. Dabei kann der Abtaster auch hier als ein elektrisches Signal erzeugender Sensor ausgebildet sein, der den Radius oder den Abstand der Kegelscheiben erfaßt. Alternativ dazu ist vorgesehen, daß der Fühler als mechanischer Taster ausgebildet ist, der mechanisch mit der Verstelleinrichtung gekoppelt ist, wobei die Verstelleinrichtung zweckmäßigerweise als Hebelmechanik ausgebildet ist. Letztere Ausführung arbeitet rein mechanisch und ist deshalb nicht von elektrischer Energie abhängig.

Im folgenden ist die Erfindung anhand von Ausführungsbeispielen näher veranschaulicht. Es zeigen:
- Fig. 1: einen Horizontalschnitt durch ein stufenloses Riemengetriebe;
- Fig. 2: eine Seitenansicht des Riemengetriebes gemäß Fig. 1 mit Geschwindigkeitsbegrenzungseinrichtung und
- Fig. 3: das Riemengetriebe gemäß Fig. 2 mit einer anderen Ausführungsform einer Geschwindigkeitsbegrenzungseinrichtung.

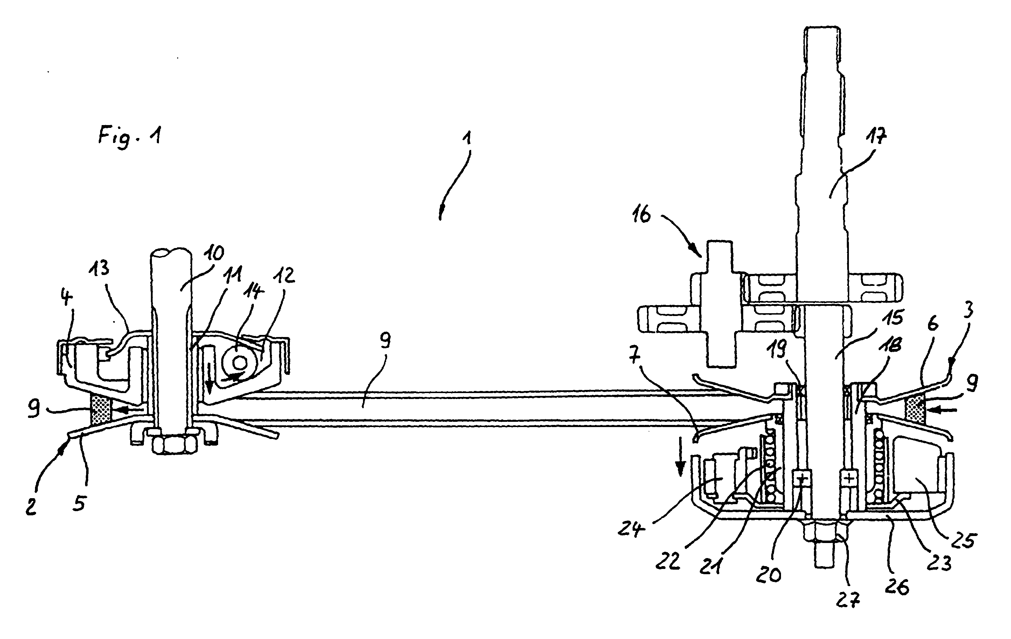

Das in Fig. 1 dargestellte Riemengetriebe 1 ist üblicher Bauart. Es weist ein antriebsseitiges Scheibenpaar 2 und ein abtriebsseitiges Scheibenpaar 3 auf, wobei jedes Scheibenpaar 2, 3 von zwei Kegelscheiben 4, 5 bzw. 6, 7 gebildet wird. Ein Antriebsriemen 9 umschlingt die Scheibenpaare 2, 3 in dem Raum zwischen den jeweiligen Kegelscheiben 4, 5 bzw. 6, 7. Die Flanken des Antriebsriemens 9 sind derart konisch geformt, daß sie an den einander gegenüberliegenden Flächen der Kegelscheiben 4, 5 bzw. 6, 7 flächig anliegen.

Bei dem antriebsseitigen Scheibenpaar 2 sitzen die Kegelscheiben 4, 5 auf einer Antriebswelle 10 des hier nicht näher dargestellten Motors. Die Antriebswelle 10 hat eine Verzahnung 11, in die die beiden Kegelscheiben 4, 5 formschlüssig einfassen, so daß sie von der Antriebswelle 10 mitgenommen werden. Die außenseitige Kegelscheibe 5 ist axial fixiert, während die innenseitige Kegelscheibe 4 axial beweglich in der Verzahnung 11 geführt ist.

Auf der Rückseite der innenseitigen Kegelscheibe 4 befindet sich ein ringförmiger Hohlraum 12, der von einer auf der Verzahnung 11 sitzenden Scheibe 13 abgeschlossen ist. Die Scheibe 13 ist axial fixiert. In dem Hohlraum 12 befinden sich mehrere Fliehkraftrollen 14, von denen hier nur eine zu sehen ist. Die Fliehkraftrollen 14 bewegen sich in Anpassung an die Drehzahl der Antriebswelle 10 und damit an die auf sie wirkenden Fliehkräfte nach außen und sorgen dabei aufgrund der Abstützung an der Scheibe 13 dafür, daß die innere Kegelscheibe 4 in Richtung auf die äußere Kegelscheibe 5 bewegt wird. Dies wiederum hat zur Folge, daß der Antriebsriemen 9 im Bereich der Umschlingung nach außen bewegt wird, so daß sich sein Umschlingungsradius vergrößert. Die Bewegung der einzelnen Teile ist durch die eingezeichneten Pfeile symbolisiert.

Das abtriebsseitige Scheibenpaar 3 sitzt auf einer Getriebeabtriebswelle 15, dessen Drehzahl durch ein Zahnradgetriebe 16 reduziert wird. Der Ausgang des Zahnradgetriebes 16 wird von einer Radantriebswelle 17 gebildet, auf der das anzutreibende Rad beispielsweise eines Motorrollers sitzt. Die innere Kegelscheibe 6 des Scheibenpaares 3 ist drehfest mit einer Hülse 18 verbunden, die über Lager 19, 20 drehbar auf der Getriebeabtriebswelle 15 gelagert ist. Auf der Hülse 18 wiederum sitzt eine Schiebehülse 21, die drehfest mit der äußeren Kegelscheibe 7 verbunden ist und axial verschieblich ist. Die Schiebehülse 21 ist von einer Schraubenfeder 22 umgeben, die sich kegelscheibenseitig an einem Absatz der Schiebehülse 21 und außenseitig an einer Scheibe 23 abstützt. Die Schraubenfeder 22 ist auf Druck beansprucht, so daß sie bestrebt ist, die äußere Kegelscheibe 7 in Richtung auf die innere Kegelscheibe 6 zu schieben und hierdurch einen ausreichenden Reibschluß zwischen den Flanken des Antriebsriemens 9 und den gegenüberliegenden Seiten der Kegelscheiben 6, 7 zu erzeugen.

Die Scheibe 23 ist drehtest mit der Hülse 18 verbunden. Im radial außen liegenden Bereich sind Fliehkraftkupplungselemente 24, 25 vorgesehen. Sie liegen innerhalb einer Kupplungsglocke 26, welche über die Schraube 27 drehtest mit der Getriebeabtriebswelle 15 verbunden ist.

Aufgrund der vorstehend beschriebenen Konstruktion wird die von dem Antriebsriemen 9 übertragene Antriebskraft auf die beiden Kegelscheiben 6, 7 übertragen. Über die Hülse 18 wird die hierbei erzeugte Drehbewegung des Scheibenpaars 3 auf die Fliehkraftkupplungselemente 24, 25 übertragen. Bei ausreichender Drehzahl legen diese sich an der Innenseite der Kupplungsglocke 26 an, so daß diese mitgenommen wird, also die gleiche Drehzahl erhält. Hierdurch wird die Getriebeabtriebswelle 15 in Drehbewegung versetzt.

Bei Änderung des Umschlingungsradius' am Scheibenpaar 2 paßt sich der Umschlingungsradius am abtriesseitigen Scheibenpaar 3 aufgrund des dortigen Federandrucks automatisch an, und zwar in der Weise, daß der Umschlingungsradius am abtriebsseitigen Scheibenpaar um so kleiner ist, je größer er am antriebsseitigen Scheibenpaar 2 ist. Hierdurch ändert sich die Übersetzung im Riemengetriebe 1. Bei kleinem Umschlingungsradius am antriebsseitigen Scheibenpaar 2 und damit bei geringer Drehzahl des Motors ist die Drehzahl an der Getriebeabtriebswelle 15 und damit auch die Geschwindigkeit des Fahrzeuges gering, während umgekehrt bei großem Umschlingungsradius am Scheibenpaar 2 und damit hoher Drehzahl des Motors auch eine hohe Drehzahl an der Getriebeabtriebswelle 15 herrscht.

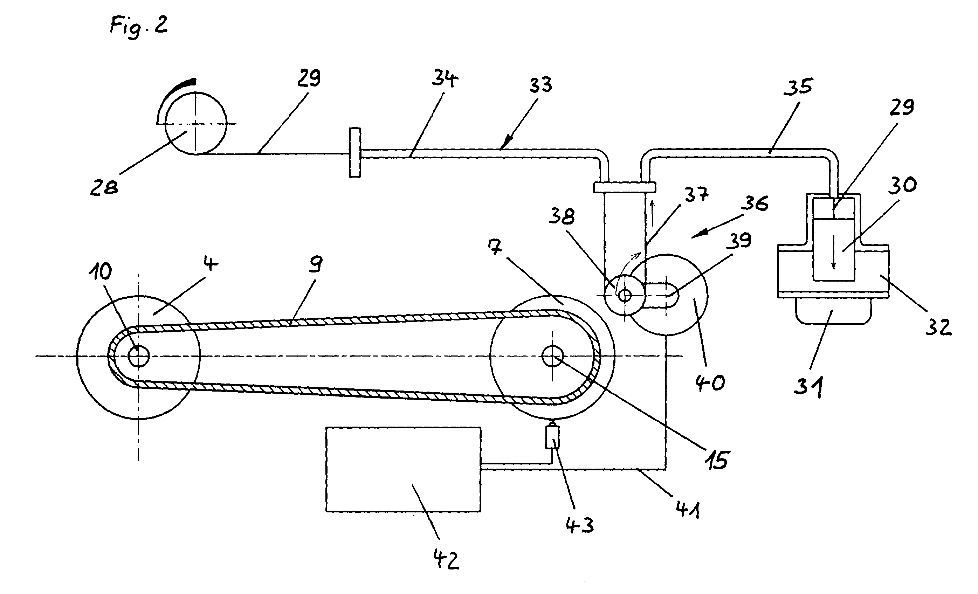

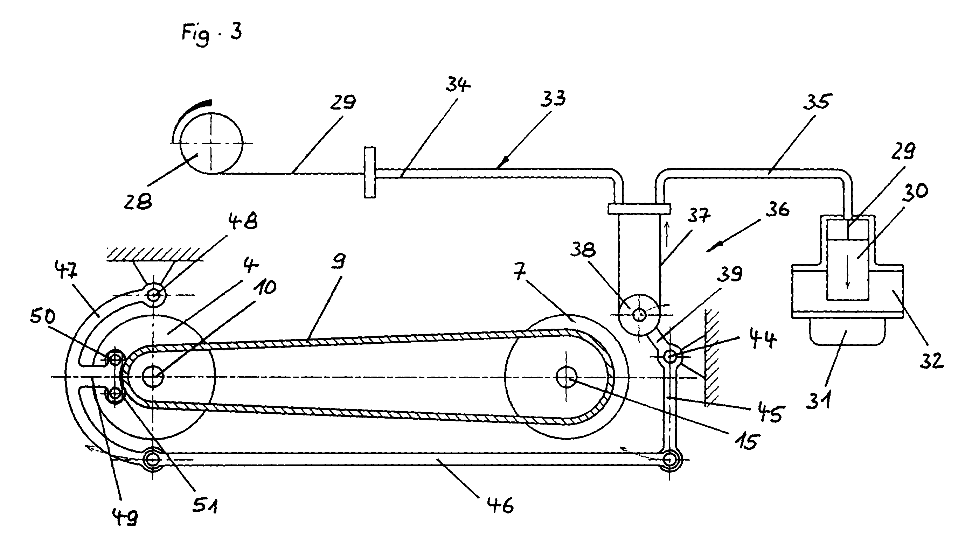

In den Figuren 2 und 3 ist das Riemengetriebe 1 lediglich schematisch in der Seitenansicht dargestellt, wobei die außenseitigen Kegelscheiben 5, 7 abgenommen sind, so daß insoweit nur der Antriebsriemen 9 und die innenseitigen Kegelscheiben 4, 6 zu sehen sind.

Im oberen Bereich ist eine Gasbetätigung für einen Motorroller dargestellt. Als Betätigungsorgan ist deshalb ein Handdrehgriff 28 vorgesehen, wie er gewöhnlich am Lenker eines Motorrollers angebracht ist. Er ist mit dem Ende eines Drahtzuges 29 in der Weise verbunden, daß der Drahtzug 29 am Handdrehgriff 28 aufgewickelt wird, wenn der Handdrehgriff 28 im Uhrzeigersinn bewegt wird.

Der Drahtzug 29 ist am anderen Ende mit einem Drosselschieber 30 verbunden, der Teil eines üblichen Vergasers 31 ist, in dem das Verbrennungsgasgemisch für den hier nicht dargestellten Motor erzeugt wird. Der Drosselschieber 30 ragt je nach Stellung des Handdrehgriffs 28 mehr oder weniger in den freien Querschnitt eines Ansaugrohrs 32 hinein, Wird der Handdrehgriff 28 im Uhrdrehzeigersinn bewegt, wird der Drosselschieber 30 angehoben, und entsprechend vergrößert sich der Ansaugquerschnitt im Vergaser 31 mit der Folge, daß der Motor mehr Verbrennungsgasgemisch erhält.

Der Drahtzug 29 verläuft innerhalb eines Drahtzugmantels 32, der hier in zwei Mantelabschnitte 34, 35 aufgeteilt ist. Zwischen den Mantelabschnitten 34, 35 befindet sich ein Schlaufenspeicher 36, in dem ein Drahtzugabschnitt 37 um eine Schlaufenrolle 38 unter Bildung einer Schlaufe geführt ist. Die Schlaufenrolle 38 sitzt am freien Ende eines schwenkbaren Rollenhebels 39, wobei dessen Schwenkachse parallel zur Drehachse der Schlaufenrolle 38 verläuft. Verschwenkt der Rollenhebel 39 nach oben, das heißt im Uhrzeigersinn, bei konstanter Stellung des Handdrehgriffs 28, vergrößert sich die wirksame Länge des Drahtzuges 29 mit der Folge, daß der Drosselschieber 30 - bewirkt durch eine entsprechende Federvorspannung - in das Ansaugrohr 32 bewegt wird und damit den freien Querschnitt einschränkt. Dies führt zu einer entsprechenden Leistungsminderung des Motors. Die Bewegung des Rollenhebels 39 wird durch Einrichtungen bewirkt, die bei den Ausführungsbeispielen gemäß den Figuren 2 und 3 unterschiedlich gestaltet sind.

Bei dem Beispiel gemäß Figur 2 sitzt der Rollenhebel 39 auf der Abtriebswelle eines elektrischen Stellmotors 40.

Dieser ist über eine Leitung 41 mit einem elektronischen Steuergerät 42 verbunden. Gegenüber dem Umfang der abtriebsseitigen Kegelscheibe 7 befindet sich ein Drehzahlsensor 43, der beispielsweise als Impulszähler ausgebildet sein kann. Hierzu weist die Kegelscheibe 7 optische Markierungen, Ausnehmungen oder Magnete auf, die von dem Drehzahlsensor 43 erfaßt werden. Die Impulse werden von dem Steuergerät 42 gezählt und bilden dann die Basis für die Ermittlung der Drehzahl der Kegelscheibe 7 und damit der Getriebeabtriebswelle 15.

Bei den gezeigten Umschlingungsradien des Antriebsriemens 9 hat die abtriebsseitige Kegelscheibe 7 eine relativ geringe Drehzahl. Entsprechend befindet sich die Schlaufenrolle 38 in ihrer tiefsten Stellung, d.h. die Länge des in dem Schlaufenspeicher 36 befindlichen Drahtzugabschnittes 37 ist entsprechend groß. Wird der Handdrehgriff 28 jetzt auf Vollgasstellung verdreht, ändert sich an der Stellung der Schlaufenrolle 38 noch nichts, so daß die Bewegung des Handdrehgriffs 28 voll auf den Drosselschieber 30 übertragen wird, und zwar in Richtung der Vergrößerung des freien Querschnittes im Ansaugrohr 32. Der Motorroller beschleunigt dann, bis er sich der zulässigen Grenzgeschwindigkeit nähert, wobei sich der Umschlingsungsradius am antriebsseitigen Scheibenpaar 2 vergrößert und am abtriebsseitigen Scheibenpaar 3 verkleinert. Die hierdurch bewirkte Erhöhung der Drehzahl an der Kegelscheibe 7 wird von dem Drehzahlsensor 43 erfaßt.

Bei Annäherung an die zulässige Höchstgeschwindigkeit (Grenzgeschwindigkeit) steuert das Steuergerät 42 den Stellmotor 40 so an, daß der Rollenhebel 39 in Pfeilrichtung, d.h. im Uhrzeigersinn, verdreht wird. Dies hat zur Folge, daß die Länge des Drahtzugabschnittes 37 verkürzt wird. Bei konstanter Stellung des Handdrehgriffs 28 bewirkt dies ein Einschieben des Drosselschiebers 30 in das Ansaugrohr 32 und damit eine Drosselung der Motorleistung. Bei entsprechender Einstellung kann der Motorroller die Grenzgeschwindigkeit nicht mehr überschreiten, selbst wenn der Handdrehgriff 28 auf Vollgasstellung steht. Sinkt die Geschwindigkeit trotz Vollgasstellung ab, wird der Rollenhebel 39 aufgrund Einwirkung des Steuergerätes 42 wieder in Gegenrichtung bewegt, und zwar möglichst so, daß eine konstante Grenzgeschwindigkeit eingehalten wird.

Das Beispiel gemäß Figur 3 zeigt eine mechanische Lösung für die Verstellung der Schlaufenrolle 38 bzw. des Rollenhebels 39. Der Rollenhebel 39 ist an einem fahrzeugfesten Lager 44 schwenkbar gelagert und über dieses Lager 44 hinaus um einen Hebelabschnitt 45 nach unten verlängert. Dessen freies Ende ist über eine unterhalb des Riemengetriebes 1 verlaufende Koppelstange 46 mit einem halbkreisförmigen Schwenkhebel 47 verbunden, der über ein Lager 48 an einem fahrzeugfesten Punkt gelagert ist. Der Schwenkhebel 47 umgibt das antriebsseitige Scheibenpaar 2 und weist an einem zwischen die Kegelscheiben 4, 5 eingreifenden Abtastvorsatz 49 zwei Abtastrollen 50, 51 auf. Eine hier nicht dargestellte Federvorspannung sorgt dafür, daß die Abtastrollen 50, 51 auf der Außenseite des Antriebsriemens 9 anliegen.

Die Funktion der mechanischen Version ist ähnlich der elektrischen Version gemäß Figur 2. In der gezeigten Stellung ist die Abtriebsdrehzahl des Riemengetriebes 1 gering, so daß sich die Schlaufenrolle 38 in einer unteren Stellung befindet und somit der sich im Schlaufenspeicher 36 befindliche Drahtzugabschnitt 37 relativ lang ist. Vergrößert sich der Umschlingungsradius am antriebsseitigen Scheibenpaar 2 durch Erhöhung der Drehzahl des Motors, wird der Schwenkhebel 47 über die Abtastrollen 50, 51 und den Abtastvorsatz 49 im Uhrzeigersinn verschwenkt. Diese Bewegung wird über die Koppelstange 46 auf den Hebelabschnitt 45 und damit auch auf den Rollenhebel 39 und die Schlaufenrolle 38 übertragen. Alle drei Teile werden im Uhrzeigersinn verschwenkt, wodurch die Schlaufenrolle 38 angehoben und damit die Länge des Drahtzugabschnittes 37 verkürzt wird. Dies wiederum hat eine Vergrößerung der wirksamen Länge des Drahtzuges 29 zur Folge und bewirkt, daß der Drosselschieber 30 in das Ansaugrohr 32 eingeschoben wird, d.h. der Motor wird gedrosselt. Eine bestimmte Grenzgeschwindigkeit kann dann trotz vollgasstellung des Handdrehgriffs 28 nicht überschritten werden.

## Patentansprüche

1. Kraftfahrzeug mit einem Motor (31), einem Getriebe (1) und einer Gasbetätigung für den Motor (31), welche einen Drahtzug (29) aufweist, der ein Betätigungsorgan, zum Beispiel ein Gaspedal oder einen Handdrehgriff (28), mit dem Motor (31) verbindet, sowie mit einer Geschwindigkeitsbegrenzungseinrichtung, **dadurch gekennzeichnet,** daß die Geschwindigkeitsbegrenzungseinrichtung eine Speichereinrichtung (36) aufweist, durch die ein Drahtzugabschnitt (37) des Drahtzuges (29) verläuft, wobei die Speichereinrichtung (36) mit einer Verstelleinrichtung (39, 40, 41, 42; 39, 45, 46, 47) zur Veränderung der Länge des in der Speichereinrichtung (36) verlaufenden Drahtzugabschnitts (37) versehen ist und wobei Verstelleinrichtung (39, 40, 41, 42; 39, 45, 46, 47) und Abtaster (43, 49, 50, 51) derart gekoppelt sind, daß die Länge des eingespeicherten Drahtzugabschnittes (37) spätestens bei Erreichen einer bestimmten Grenzgeschwindigkeit verringert wird.

2. Kraftfahrzeug nach Anspruch 1, **dadurch gekennzeichnet,** daß die Speichereinrichtung als Schlaufenspeicher (36) ausgebildet ist.

3. Kraftfahrzeug nach Anspruch 2, **dadurch gekennzeichnet,** daß der Schlaufenspeicher (36) wenigstens eine von dem Drahtzugabschnitt (37) umschlungene Schlaufenrolle (38) aufweist, deren Stellung über die Verstelleinrichtung (39, 40, 41, 42; 39, 45, 46, 47) veränderbar ist.

4. Kraftfahrzeug nach einem der Ansprüche 1 bis 3, **dadurch gekennzeichnet,** daß die Verstelleinrichtung einen elektrischen Stellantrieb (40) aufweist und der Abtaster als ein elektrisches Signal erzeugender Sensor (43) ausgebildet ist.

5. Kraftfahrzeug nach Anspruch 4, **dadurch gekennzeichnet,** daß der Sensor als Drehzahlsensor (43) ausgebildet ist, der getriebeausgangsseitig angeordnet ist.

6. Kraftfahrzeug nach einem der Ansprüche 1 bis 4, **dadurch gekennzeichnet,** daß das Getriebe als stufenloses Getriebe (1) mit einem Antriebsriemen (9) oder einem Schubgliederband sowie mit einem antriebsseitigen Scheibenpaar (2) und einem abtriebsseitigen Scheibenpaar (3) mit jeweils zwei abstandsveränderbaren Kegelscheiben (4, 5 bzw. 6, 7) ausgebildet ist, die von dem Antriebsriemen (9) bzw. dem Schubgliederband umschlungen sind, und daß der Abtaster als Fühler (49, 50, 51) zur Erfassung des Radius' der Umschlingung an einer der Scheibenpaare (2) oder des Abstandes der Kegelscheiben (4, 5) eines Scheibenpaares (3) ausgebildet ist.

7. Kraftfahrzeug nach Anspruch 6, **dadurch gekennzeichnet,** daß der Fühler als mechanischer Taster (49, 50, 51) ausgebildet ist, der mechanisch mit der Verstelleinrichtung gekoppelt ist.

8. Kraftfahrzeug nach Anspruch 6 oder 7, **dadurch gekennzeichnet,** daß die Verstelleinrichtung als Hebelmechanik (45, 46, 47) ausgebildet ist.
